# EUROPEAN PATENT APPLICATION

(11) **EP 1 452 456 A1**
(43) Date of publication of application: **01.09.2004**
(21) Application number: 04002789.8
(22) Date of filing: 09.02.2004
(51) Int. Cl.: B65D 43/16

(54) **Biological specimen cassette**

(30) Priority: 26.02.2003 US 375846
(71) Applicant: Les Plastiques Simport Ltee, St-Mathieu-de-Beloeil (Quebec) J3G 4S5 (CA)
(72) Inventor: Lafond, André, Saint-Hilaire (Quebec) J3G 4S5 (CA); Leblanc, Daniel, Longueuil (Quebec) J4M 1K4 (CA)
(74) Representative: Grosset-Fournier, Chantal Catherine

(57) **Abstract**

A biological specimen cassette comprising a base (12) and a lid (10) wherein the lid is pivotally mounted relative to the base. The lid so pivots into the base that, once in a closed position, the lid is included within the base thereby providing to the cassette, an overall thickness which is equal to that of the base. Similarly, the lid has a tab (18) which does not extend beyond the dimensions of the base.

## Description

### FIELD OF THE INVENTION

The present invention relates to a biological specimen cassette and, more particularly, to a cassette suitable for securing a biological tissue specimen in a fluid permeable manner; the tissue can be subsequently sliced into thin sections on a microtome for subsequent microscopic examination.

### BACKGROUND OF THE INVENTION

Cassettes for processing biological specimens are well known. For example, U.S. Pat. No. 4,220,252 issued Sep. 2, 1990 to Beall et al. describes such a container wherein a perforated receptacle is attached through a frangible hinge portion to a perforated cover. When the cover is rotated about the hinge to mate against the receptacle, the detent means on the cover become inter-engageable with abutment means on the receptacle to hold the cover and receptacle in removable mating relationship.

U.S. Pat. No. 4,421,246 issued Dec. 20, 1983 to Schultz et al. describes a tissue cassette having an open top perforated base adapted to receive a tissue specimen and a perforated lid adapted to cover the base. In the open position, the base and lid are secured together through one or more gates which will break when flexed.

U.S. Pat. No. 4,997,100 issued Mar. 5, 1991 to Dudek describes a unitary biological processing apparatus wherein a perforated receptacle with two arc-shaped abutments and a third hook-shaped abutment is attached through a frangible hinge portion to a perforated lid with two arc-shaped detents at the two edges of the lid.

U.S. Pat. No. 5,533,642 issued July 9, 1996 to Lafond et al. describes a biological specimen cassette which comprises a base and a lid wherein the lid has two pivotal connections, one at the front wall, the other at the rear wall of the base. Once the lid is pivoted into a closed position, its thickness adds to the overall thickness of the cassette. Also, the lid has a tab which extends beyond the rear wall of the base, thereby also adding to the overall dimension of the cassette.

These biological specimen cassettes are adapted to be installed with similarly constructed cassettes as a package in a cassette dispenser from which cassettes are thereafter slidingly dispensed individually, as described and illustrated in U.S. patent 6,176,383 issued January 23, 2001 to Lafond et al. Because the overall dimension of lid-covered cassettes is greater than lid-free cassettes, the latter are placed in the dispenser and, once dispensed therefrom, a lid is attached thereto.

There is a need therefore to provide a lid-covered cassette as compact as possible so as to enable as much cassettes as possible in the above dispenser. Also, because the cassettes are slidingly dispensed, their sliding must be as smooth as possible; thus, the construction of the cassette must be such as to prevent any hinderance to the sliding as would be the case with presently known cassettes.

### STATEMENT OF THE INVENTION

It is an object of the present invention to provide a cassette of the type described with a construction which will avoid the above described problems of present cassettes with their dispenser.

This is achieved by providing a cassette which comprises:
a base having a perforated bottom wall, opposite side walls, front and rear walls; the rear wall having first lid connecting means; the side walls having second lid connecting means adjacent the front wall; and
a lid having a perforated top face, the top face including an integral tab formed at one end thereof and extending over the rear wall of the base; the lid defining first base engaging means extending from and below the one end of the top face for engaging the first lid connecting means of the rear wall; the lid defining second base engaging means at an opposite end thereof for engaging the second lid connecting means of the base to provide pivotal movement of the lid relative to the base; the lid having opposite side edges so distanced from one another as to be included in the base between the opposite side walls of the base wherein, in a closed position, the top face of the lid does not extend above the upper edges of the side walls of the base.

In a preferred form of the invention, the top face of the lid is co-planar with the upper edges of the side walls of the base.

In another form of the invention, the integral tab of the lid has an outer edge which doe not extend beyond the rear wall of the base.

Other objects and further scope of applicability of the present invention will become apparent from the detailed description given hereinafter. It should be understood, however, that this detailed description, while indicating preferred embodiments of the invention, is given by way of illustration only, since various changes and modifications within the spirit and scope of the invention will become apparent to those skilled in the art.

### BRIEF DESCRIPTION OF THE DRAWINGS

Figure 1 is an elevational side view of a biological specimen cassette of the prior art;
Figure 2 is a perspective view of a biological specimen cassette made in accordance with the present invention showing the lid in the open position;
Figure 3 is a cross sectional view showing the lid in a closing position; and
Figure 4 is an elevational side view of the cassette.

### DESCRIPTION OF PREFERRED EMBODIMENTS

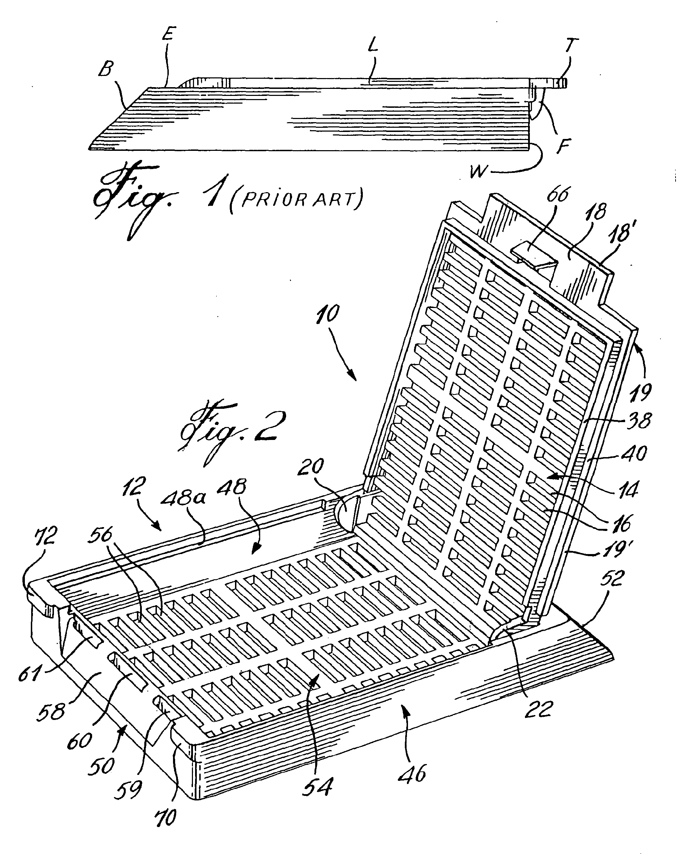

Referring to figure 1, there is shown a biological specimen cassette of the prior art which consists of a lid L and of a base B. It can be seen that the lid L extends in a plane above and beyond the upper edge E of the side wall of the base B. Also, the lid has a tab T with a finger F which extends rearwardly of the rear wall W of the base B.

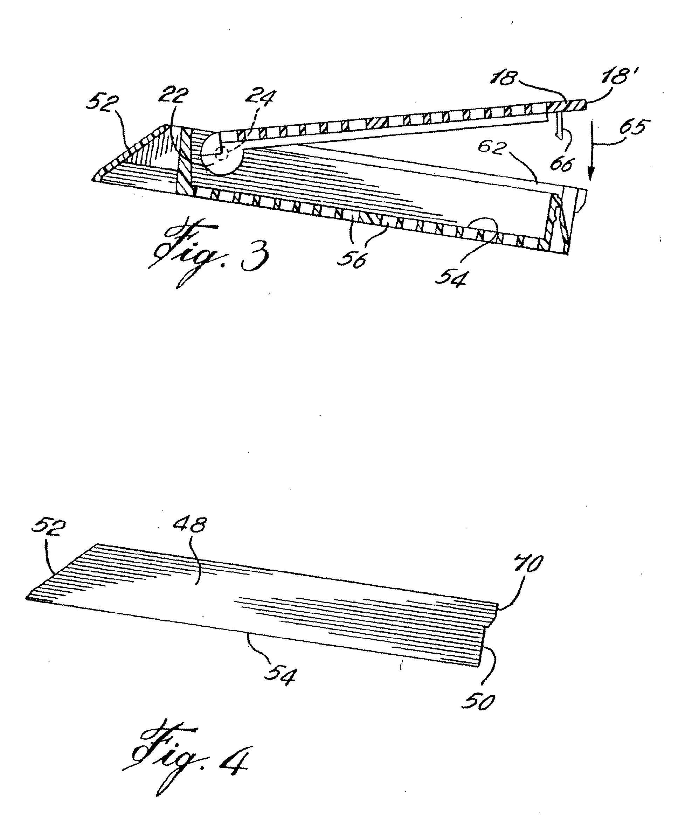

Figures 2, 3 and 4 show a cassette made in accordance with the present invention consisting of a lid 10 and of a base 12.

The lid 10 consists of a body having a main rectangular portion 14 displaying a series of small rectangular openings 16. One end of the lid displays an integral tab 18 extending in the same plane as that of the top wall 19 of the body 14 while the opposite end thereof displays a pair of side wings 20 and 22, each displaying, on its outer face, a semi-spherical protuberance (one being shown as 24 in figure 3).

The under face of the lid displays an inner frame 38 leaving a peripheral gap 40 between the frame and each outer adjacent side edge 19' of the lid.

The base 12 defines a rectangular body having opposite sidewalls 46 and 48, a rear wall 50, a front wall 52 and a bottom wall 54. The front wall 52 is angled to display, on the outer face thereof, identification data to be inscribed thereon pertaining to a specimen which is to be placed on the bottom wall 54. The latter is perforated with a series of rectangular openings 56. Each side wall 46, 48 has, in its inner face, adjacent the front wall, a semi-spherical recess (not shown) corresponding substantially in shape to the semi-spherical protuberance 24 of the lid so as to pivotably mounted the lid to the base. The rear wall 50 includes a rectangular recessed inclined area 58 with a series of openings 59, 60 and 61 at its upper edge thereof.

The side walls 46 and 48 of the base each display a recessed shoulder (are being shown as 48a) adjacent the upper edges of the side walls. The distance of this shoulder to the corresponding upper edge of the side wall is substantially equal to the thickness of the edge 19' of the lid so that, once the lid is in a closed cover position with the base, the height of the cassette, as seen in figure 4, is equal to the height of the base, the plane of the top face of the lid being thereby co-planar with the upper edges of the base side walls.

FIG. 2 illustrates the lid in the open position ready to receive a specimen on the bottom wall 54 of the base. The connection of the lid to the base at the front end of the cassette is achieved through a snap-in engagement of the semi-spherical protuberances of the lid in the corresponding semi-spherical recesses in the side walls 46 and 48 of the base.

After a specimen is placed on the bottom wall of the base, the lid is closed as shown by arrow 65 in FIG. 3. The lid is secured in the closed position through another snap-in engagement by forcing a tongue 66 integrally formed to the tab 18 into the central opening 60 in the rear wall 50 of the base 12.

The rear wall 50 has a pair of opposite small projections 70 and 72 adjacent its upper edge; however, in the closed lid condition, the rear edge 18' of the tab 18 does not extend beyond (and is therefore coplanar with) the outmost surface of the projections 70 and 72 to thereby form a compact assembly of a lid and its base.

The cassette is molded from a high density polymer so that it may keep the specimens safely submerged in solvent and be totally resistant to the chemical action of histological solvents. The efficient flow-through openings in the lid and base maximize fluid exchange and insure proper drainage. The lid may be opened and closed as often as necessary and it relocks securely without danger of specimen loss. Hence, the cassette must be made of a deformable plastics material so that the snap-in as well as the snap-out engagements at the front and rear walls of the cassette be properly carried out.

Although the invention has been described above with respect with one specific form, it will be evident to a person skilled in the art that it may be modified and refined in various ways. For example, it could be possible to have the closed lid below the plane that would extend in the plane of the upper edges of the side walls. Similarly, it would be possible to have the rear edge 18' extending rearwardly of the rear wall of the base. It is therefore wished to have it understood that the present invention should not be limited in scope, except by the terms of the following claims.

## Claims

1. A biological specimen cassette comprising:
a base having a perforated bottom wall, opposite side walls, front and rear walls; said rear wall having first lid connecting means; said side walls having second lid connecting means adjacent said front wall; and
a lid having a perforated top face, said top face including an integral tab formed at one end thereof and extending over said rear wall of said base; said lid defining first base engaging means extending from and below said one end of said top face for engaging said first lid connecting means of said rear wall; said lid defining second base engaging means at an opposite end thereof for engaging said second lid connecting means of said base to provide pivotal movement of said lid relative to said base; said lid having opposite side edges so distanced from one another as to be included in said base between said opposite side walls of said base wherein, in a closed position, said top face of said lid does not extend above upper edges of said side walls of said base.

2. A cassette as defined in claim 1, wherein said top face of said lid is co-planar with said upper edges of said side walls of said base.

3. A cassette as defined in claim 1, wherein said integral tab of said lid has an outer edge which does not extend beyond said rear wall of said base.

4. A cassette as defined in claim 1, wherein said first base engaging means of said lid consist of a tongue and wherein said first lid connecting means of said base consist of tongue receiving means in said rear wall.

5. A cassette as defined in claim 4, wherein said tongue receiving means consists of an opening in said rear wall; said tongue snappily engageable with said opening.

6. A cassette as defined in claim 4, wherein said tongue is integral with and extends below said tab of said lid.

7. A cassette as defined in claim 1, wherein said rear wall includes opposite rearwardly projections and an inwardly inclined central portion between said two projections.

8. A cassette as defined in claim 1, wherein said front wall is angled to display inscribed data related to specimen placed in said base.

9. A cassette as defined in claim 1, wherein said base and said lid are made of deformable plastics material.
